# EUROPÄISCHE PATENTSCHRIFT

(11) **EP 3 815 924 B1**
(45) Veröffentlichungstag und Bekanntmachung des Hinweises auf die Patenterteilung: **29.12.2021**
(21) Anmeldenummer: 19206462.4
(22) Anmeldetag: 31.10.2019
(51) Int. Cl.: B43K 19/00, C09D 13/00, B43K 19/18

(54) **MINE ODER KREIDE FÜR SCHREIB- UND/ODER MALZWECKE**
REFILL OR CHALK FOR WRITING AND/OR PAINTING PURPOSES
MINE OU CRAIE DESTINÉ À L'ÉCRITURE ET / OU À LA PEINTURE

(43) Veröffentlichungstag der Anmeldung: 05.05.2021
(73) Patentinhaber: Faber- Castell AG, 90546 Stein (DE)
(72) Erfinder: Barroso, Vladimir, 13561-358 Sao Carlos (BR); Merola, Eder D. J., 13560-340 Sao Carlos (BR); Lugert, Gerhard, 90431 Nürnberg (DE)
(74) Vertreter: Schlögl, Markus

(56) Entgegenhaltungen:
- EP-A1- 2 520 442
- DD-A1- 239 213

## Beschreibung

Die Erfindung betrifft eine Mine oder Kreide für Schreib- und/oder Malzwecke. Minen werden zur Verwendung in einem Stift innerhalb eines Stiftschaftes etwa aus Holz oder Kunststoff angeordnet, Kreiden sind für eine Verwendung ohne einen solchen Stiftschaft vorgesehen. Bei der Erzeugung eines Aufstriches auf einer Unterlage wie Papier wird eine Mine oder Kreide einer relativ starken mechanischen Belastung ausgesetzt. Dies liegt unter anderem daran, dass bei Schreib- und Malarbeiten weiche Minen, mit denen relativ große Mengen auf eine Unterlage übertragen werden können, etwa wie dies bei Kosmetikstiften der Fall ist, meist nicht zweckmäßig sind. Minen für den in Rede stehenden Zweck weisen daher eine festere Konsistenz auf und sind insgesamt bruchstabiler als Kosmetikminen. Die erforderliche Festigkeit wird beispielsweise bei Kunststoffminen durch Verwendung polymerer Bindemittel erreicht. Solche Kunststoffminen weisen zwar eine ausreichende Festigkeit auf, sind aber hinsichtlich ihres Aufstrichverhaltens nicht optimal, da relativ hohe Kräfte erforderlich sind, um so viel Minenmasse auf die Unterlage zu applizieren, dass einigermaßen deckende Aufstriche entstehen. Ferner muss zur thermoplastischen Erweichung des polymeren Bindemittels die Vermischung der Ausgangssubstanzen und die Extrusion von Minensträngen bei relativ hohen Temperaturen von bis zu 180 °C erfolgen, was zum einen einen entsprechend hohen Energieaufwand bedeutet und zum anderen den Einsatz temperaturempfindlicher Farbpigmente verhindert.

Aus EP 2 520 442 A1 sind Minen mit einer Minengrundmasse auf Fett- und Wachsbasis bekannt, bei denen Fettsäuren und/oder Fettsäurederivate eingesetzt werden. Eine solche Mine lässt sich bei Temperaturen unterhalb von 160 °C verarbeiten und ist im Anschluss an die Extrusion bereits ausreichend mechanisch stabil und bruchfest, um den Belastungen, die sich bei normalem Gebrauch ergeben, stand zu halten. Der Kraftaufwand und der Anteil an Farbpigmenten zur Erzeugung eines farbkräftigen und deckenden Abstriches gegenüber polymergebundenen Minen sind bereits reduziert, wofür in hohem Maße die in der Mine enthaltende Fettsubstanz, also Fettsäure und/oder Fettsäurederivat verantwortlich ist. Dennoch ist eine weitere Reduzierung der Bruchanfälligkeit wünschenswert.

Aufgabe der Erfindung ist es daher, eine verbesserte Mine oder Kreide für Schreib- und/oder Malzwecke, insbesondere eine Mine oder Kreide deren Flexibilität erhöht sowie deren Bruchanfälligkeit weiter reduziert ist, anzugeben.

Diese Aufgabe wird durch eine Mine oder Kreide für Schreib- und/oder Malzwecke gelöst, die 15 Gew.-% bis 30 Gew.-% einer Minengrundmasse auf Fett- und Wachsbasis und 40 Gew.-% bis 80 Gew.-% wenigstens eines Füllstoffs und 0,1 Gew.-% bis 30 Gew.-% wenigstens eines Farbmittels enthält, wobei die Minengrundmasse - bezogen auf die Gesamtmasse der Mine - 0,5 Gew.-% bis 10 Gew.-% Aluminiumdistearat, 5 Gew.-% bis 20 Gew.-% oxidiertes Polyethylenwachs und 5 Gew.-% bis 22 Gew.-% wenigstens eines Paraffinwachses enthält.

Nachfolgend wird vorwiegend von Minen gesprochen. Die Ausführungen gelten jedoch ebenso in Bezug auf Kreiden.

Die Ausgangsubstanzen einer solchen Mine oder Kreide, nämlich die pulver- oder flockenförmigen Bestandteile der Minengrundmasse, wenigstens ein beigemengter Füllstoff und ein oder mehrere Farbmittel, lassen sich bereits bei einer Temperatur von etwa 120 °C innig vermischen, und bei einer Temperatur von etwa 130 °C extrudieren. Dabei kommt es zu einer Erweichung der Minengrundmasse, wobei deren Konsistenz so beschaffen ist, dass sich trotz eines hohen Anteils an Füllstoff und Farbmittel Minenstränge mit einem Durchmesser z.B. von 3 bis 6 mm, im Falle von Kreiden auch mehr, extrudieren lassen, die ohne die Gefahr einer mechanischen Beeinträchtigung, etwa beim Weitertransport zu einer Einleimstation, handhabbar sind.

Die erfindungsgemäßen Minen lassen sich im Vergleich zu polymergebundenen Minen mit hohen Geschwindigkeiten von bis zu 60 m/min extrudieren, da die auf eine Extrusionstemperatur von beispielsweise 130°C erhitzte Minenmasse eine ausreichend feste Konsistenz aufweist. Aus den extrudierten Minensträngen sind Minen ablängbar, die weder hart sind noch eine gummiartige Konsistenz aufweisen und mit denen sich auch mit geringen Anteilen an Farbmitteln farbkräftige und deckende Aufstriche auf einer Unterlage erzeugen lassen.

Überraschenderweise hat sich gezeigt, dass durch die Verwendung von Paraffinwachsen anstelle von Fettsäuren und/oder Fettsäurederivaten eine Erhöhung der Flexibilität der Minen oder Kreiden erreicht wird. Die Minen weisen eine deutlich geringere Bruchrate auf, wodurch insbesondere der Ausschuss bei der Verarbeitung zu holzgefassten, spitzbaren Stiften reduziert wird. Zusätzlich wird durch die verbesserten mechanischen Eigenschaften auch ein Anbrechen der Minen in holzgefassten Stiften beim Anspitzvorgang mit mechanischen Handspitzern deutlich minimiert.

Insbesondere die Verwendung eines Mikroparaffinwachses hat sich als vorteilhaft erwiesen. Ein solches Mikroparaffinwachs ist beispielsweise unter den Handelsnamen Solven Wax 170³⁾ oder Polarwachs A75¹²⁾ erhältlich.

Das Aufstrichverhalten der Mine lässt sich ferner durch den Schmelzpunkt des eingesetzten Paraffinwachses steuern, wobei ein niedrigerer Schmelzpunkt zu weicheren, ein hoher Schmelzpunkt zu härteren Abstrichen führt. Sehr gute Ergebnisse hinsichtlich der Härte des Abstriches haben sich mit einem Paraffinwachs, insbesondere einem Mikroparaffinwachs, mit einem Schmelzpunkt von vorzugsweise 60°C bis 110°C, besonders bevorzugt mit einem Schmelzpunkt von 80°C bis 85 °C erreichen lassen.

Ferner ist von Vorteil, dass trotz hoher Anteile an partikelförmigen Substanzen wie Füllstoffen und Farbmitteln insgesamt nur 15 Gew.-% bis 30 Gew.-%, vorzugsweise 15 Gew.-% bis 26 Gew.-% an Minengrundmasse erforderlich sind. Da die Substanzen der Minengrundmasse vergleichsweise teuer sind, lassen sich dadurch Kosten einsparen.

Das eingesetzte oxidierte Polyethylenwachs hat vorzugsweise einen Schmelzpunkt von 110 °C bis 135 °C, insbesondere von 115 °C bis 130 °C. Oberhalb dieser Temperaturen hat das oxidierte Polyethylenwachs eine nahezu wasserartige Viskosität. Unterhalb dieser Temperaturen bildet sich durch Vermischen mit den weiteren Bestandteilen der Minengrundmasse jedoch eine sehr gut extrudierbare Masse aus. Die vorzugsweise eingesetzten und sich hinsichtlich des Schmelzpunktes unterscheidenden oxidierten Polyethylenwachse sind beispielsweise unter den Handelsnamen Licowax PED 121²⁾ oder Licowax PED 191²⁾ erhältlich.

Als Aluminiumdistearat, welches für das geschilderte Eigenschaftsprofil der Mine einen wichtigen Beitrag liefert und zudem als Verdicker wirkt und somit eine gute Extrusion gewährleistet, reichen vorzugsweise Mengen von 0,5 Gew.-% bis 5 Gew.-%, besonders bevorzugt Mengen von 0,5 Gew.-% bis 3 Gew.-% aus.

Der Anteil an oxidiertem Polyethylenwachs lässt sich insbesondere auf 7 Gew.-% bis 15 Gew.-% senken, um die besten Ergebnisse hinsichtlich der geschilderten Mineneigenschaften weiterhin zu erreichen.

Für das Paraffinwachs hat sich ein Anteil von 5 bis 15 Gew.-% als besonders geeignet erwiesen, um einerseits die Kosten zu reduzieren und andererseits eine geringe Bruchanfälligkeit der Mine zu erzielen.

Der Hauptanteil der Minenmasse wird durch wenigstens einen polaren Füllstoff, vorzugsweise einen Füllstoff aus der Gruppe Kaolin, Glimmer, Bimsmehl und Talk gebildet, wobei Kaolin besonders bevorzugt ist. Ein solcher Füllstoff wird aufgrund seiner Polarität, also aufgrund der Existenz von getrennten Ladungsschwerpunkten in seinem chemischen Aufbau, etwa seiner Kristallstruktur, von einer Grundmasse, die Substanzen mit polaren Molekülgruppen aufweist, besonders gut gebunden. In diesem Sinne ist es daher vorteilhaft, nicht unpolares, sondern polares, nämlich oxidiertes Polyethylenwachs einzusetzen.

Als Farbmittel werden vorzugsweise organische und/oder anorganische Farbpigmente eingesetzt. Diese haben aufgrund ihrer chromophoren Gruppen ebenfalls polaren Charakter und werden daher von der vorgeschlagenen Minenmasse gut gebunden.

Damit Füllstoff- und Farbpigmentpartikel das Abstrichverhalten und die Konsistenz der Mine nicht negativ beeinflussen, etwa zu einer brüchigen, krümeligen Konsistenz führen, werden vorzugsweise Füllstoffe und Farbpigmente mit einer mittleren Partikelgröße D90 < 40 µm eingesetzt.

Im Folgenden sind vier Beispielrezepturen von gefärbten Minen aufgeführt. Die Ausgangsubstanzen (insgesamt z.B. 100 kg) werden in einem Mischer bei 120 °C gemischt. Die Extrusion der Minenmasse zu Minensträngen mit einem Durchmesser von etwa 3 bis 6 mm erfolgt beispielsweise mit einem Zweischneckenextruder bei einer Temperatur von 130 °C. Für die Extrusion von 100 kg Minenmasse wird etwa 1h benötigt. An den Extruder schließt sich eine Kühlstrecke von einigen Metern an. Die extrudierten Minenstränge werden zu Minen abgelängt, welche sofort weiterverarbeitet werden können.

**Beispiel A: Grüne Farbstiftmine mit einem Durchmesser von 3,3 mm**

| | |
|---|---|
| Aluminiumdistearat (CAS-Nr. 97404-28-9, Smp = 140°C)¹⁾ | 2,10 Gew.-% |
| Oxidiertes Polyethylenwachs (Licowax PED 121, CAS-Nr. 68441-17-8, Smp. ca. 115 °C)²) | 13,00 Gew.-% |
| Solven Wax 170 (CAS-Nr. 63231-60-7, Smp. Ca 82 °C)³⁾ | 7,40 Gew.-% |
| Kaolin BSK-H⁴⁾ | 71,50 Gew.-% |
| Pigment Green 7⁵⁾ | 2,20 Gew.-% |
| Titandioxid Kronos 2300⁶⁾ | 3,80 Gew.-% |

**Beispiel B: Blaue Farbstiftmine mit einem Durchmesser von 3,3 mm**

| | |
|---|---|
| Aluminiumdistearat (CAS-Nr. 97404-28-9, Smp = 140°C)¹⁾ | 1,70 Gew.-% |
| Oxidiertes Polyethylenwachs (Licowax PED 121, CAS-Nr. 68441-17-8, Smp. ca. 115 °C)²) | 9,30 Gew.-% |
| Solven Wax 170 (CAS-Nr. 63231-60-7, Smp. Ca 82 °C)³⁾ | 5,00 Gew.-% |
| Compacted Talc GM10⁷⁾ | 80,00 Gew.-% |
| Titandioxid Kronos 2300⁶⁾ | 1,00 Gew.-% |
| Cosmos Blue ASF⁸⁾ | 2,75 Gew.-% |
| Permanentcarmin FBB⁹⁾ | 0,25 Gew.-% |

**Beispiel C: Violette Farbstiftmine mit einem Durchmesser von 5,5 mm**

| | |
|---|---|
| Aluminiumdistearat (CAS-Nr. 97404-28-9, Smp = 140°C)¹⁾ | 1,00 Gew.-% |
| Oxidiertes Polyethylenwachs (Licowax PED 191, CAS-Nr. 68441-17-8, Smp. ca. 120-130 °C)²) | 9,00 Gew.-% |
| Solven Wax 170 (CAS-Nr. 63231-60-7, Smp. Ca 82 °C)³⁾ | 10,00 Gew.-% |
| Kaolin Speswhite (CAS-Nr. 1332-58-7)¹⁰⁾ | 77,64 Gew.-% |
| Pigment Violet 23¹¹⁾ | 2,36 Gew.-% |

**Beispiel D: Rote Farbstiftmine mit einem Durchmesser von 3,8 mm**

| | |
|---|---|
| Aluminiumdistearat (CAS-Nr. 97404-28-9, Smp = 140°C)¹⁾ | 1,00 Gew.-% |
| Oxidiertes Polyethylenwachs (Licowax PED 191, CAS-Nr. 68441-17-8, Smp. ca. 120 - 130 °C)²) | 13,00 Gew.-% |
| Polarwachs A75 (Paraffin-Wachs, Tropfpunkt: ISO 2176 78 - 82 °C)¹²⁾ | 12,00 Gew.-% |
| Kaolin Speswhite (CAS-Nr. 1332-58-7)¹⁰⁾ | 69,00 Gew.-% |
| Pigment Red 2¹³⁾ | 5 Gew.-% |

Zur Untersuchung der mechanischen Eigenschaften der erfindungsgemäßen Minen wurde ein Falltest (Droptest) durchgeführt. Hierbei werden die Minen aus einer Höhe von 50 cm von einem Tisch gerollt und fallen auf einen Boden, der mit keramischen Fliesen ausgestattet ist. In der untenstehenden Tabelle sind die Versuchsergebnisse von zwei erfindungsgemäßen Minen gemäß obiger Beispiele A und B sowie zweier Vergleichsminen V1 (Mine gemäß Beispiel 5 aus EP 2 520 442 A1) und V2 (Mine gemäß Beispiel 3 aus EP 2 520 442 A1) aufgeführt. Um ein aussagekräftiges Ergebnis zu erhalten, wurde der Falltest mit jeweils 80 Minen pro Rezeptur durchgeführt. Im Anschluss wurden die Minenbrüche pro Mine ermittelt.

| Anzahl der Minenbrüche pro Mine | Vergleichsmine V1 | Vergleichsmine V2 | Beispiel A | Beispiel B |
|---|---|---|---|---|
| 0 | 0 (0 %) | 0 (0 %) | 14 (17,5 %) | 19 (23,75 %) |
| 1 | 2 (2,50 %) | 3 (3,75 %) | 63 (78,75 %) | 54 (67,50 %) |
| 2 | 42 (52,50 %) | 38 (47,50 %) | 2 (2,50 %) | 5 (6,25 %) |
| 3 | 12 (15,00 %) | 20 (25,00 %) | 1 (1,25 %) | 2 (2,50 %) |
| 4 | 20 (25,00 %) | 12 (15,00 %) | 0 | 0 |
| 5 und mehr | 4 (5,00 %) | 7 (8,75 %) | 0 | 0 |

Beim Falltest hat sich gezeigt, dass die erfindungsgemäßen Minen deutlich weniger bruchanfällig sind. Dadurch wird der Ausschuss bei der Verarbeitung zu holzgefassten, spitzbaren Stiften reduziert sowie auch die Lebensdauer der Stifte oder Kreiden während deren Verwendung erhöht.

Zusätzlich wird durch die verbesserten mechanischen Eigenschaften auch ein Anbrechen der Minen in holzgefassten Stiften beim Anspitzvorgang mit mechanischen Handspitzern deutlich minimiert. Ein dahingehender Test hat gezeigt, dass die Minenbrüche beim Anspitzen von etwa 4% bei den Vergleichsminen V1, V2 auf unter 2% bei erfindungsgemäßen Minen gemäß Beispiel A und B reduziert werden konnten.

### Hersteller/Lieferant:

1) Peter Greven, D-53902 Bad Münstereifel
2) Clariant AG, D-65929 Frankfurt am Main
3) Solven Solventes e Quimicos LTDA., St. Professora Abigal Alves Pires, 301 - Ch. Nova Boa Vista - Hortolandia / SP ZIP code: 13185-071 Brasilien
4) Amberger Kaolinwerke, D-92242 Hirschau
5) Clariant AG, D-65929 Frankfurt am Main
6) Kronos, D-51737 Leverkusen
7) Magnesita S.A., Bela Vista - 01311-000 Sao Paolo/SP
8) Toyo INK, 60870 Villers Saint Paul, France
9) Clariant AG, D-65929 Frankfurt am Main
10) Imerys Minerals Ltd. Cornwall, PL24 2SQ, United Kingdom
11) Clariant AG, D-65929 Frankfurt am Main
12) Wachs- u. Ceresin-Fabriken, Th. C. Tromm GmbH, Feuerstr. 7 - 17, D 50735 Köln
13) Clariant AG, D-65929 Frankfurt am Main

## Patentansprüche

1. Mine oder Kreide für Schreib- und/oder Malzwecke, mit 15 Gew.-% bis 30 Gew.-% einer Minengrundmasse auf Fett- und Wachsbasis und 40 Gew.-% bis 80 Gew.-% wenigstens eines Füllstoffs und 0,1 Gew.-% bis 30 Gew.-% wenigstens eines Farbmittels, wobei die Minengrundmasse - bezogen auf die Gesamtmasse der Mine - 0,5 Gew.-% bis 10 Gew.-% Aluminiumdistearat und 5 Gew.-% bis 20 Gew.-% oxidiertes Polyethylenwachs enthält, **dadurch gekennzeichnet, dass** die Minengrundmasse außerdem 5 Gew.-% - 22 Gew.-% wenigstens eines Paraffinwachses enthält.

2. Mine oder Kreide nach Anspruch 1, **dadurch gekennzeichnet, dass** wenigstens ein Mikroparaffinwachs enthalten ist.

3. Mine oder Kreide nach einem der Ansprüche 1 oder 2, **dadurch gekennzeichnet, dass** ein Paraffinwachs, insbesondere ein Mikroparaffinwachs, mit einem Schmelzpunkt von 60°C bis 110°C enthalten ist.

4. Mine oder Kreide nach Anspruch 3, **dadurch gekennzeichnet, dass** ein Paraffinwachs, insbesondere ein Mikroparaffinwachs, mit einem Schmelzpunkt von 80°C bis 85°C enthalten ist.

5. Mine oder Kreide nach einem der vorhergehenden Ansprüche, **dadurch gekennzeichnet, dass** der Anteil an Minengrundmasse maximal 26 Gew.-% beträgt.

6. Mine oder Kreide nach einem der vorhergehenden Ansprüche, **dadurch gekennzeichnet, dass** das oxidierte Polyethylenwachs einen Schmelzpunkt von 110 °C bis 135 °C aufweist.

7. Mine oder Kreide nach Anspruch 6, **dadurch gekennzeichnet, dass** das oxidierte Polyethylenwachs einen Schmelzpunkt von 115 °C bis 130 °C aufweist.

8. Mine oder Kreide nach einem der vorhergehenden Ansprüche, **dadurch gekennzeichnet, dass** der Anteil an Aluminiumdistearat 0,5 Gew.-% bis 5 Gew.-% beträgt.

9. Mine oder Kreide nach Anspruch 8, **dadurch gekennzeichnet, dass** der Anteil an Aluminiumdistearat 0,5 Gew.-% bis 3 Gew.-% beträgt.

10. Mine oder Kreide nach einem der vorhergehenden Ansprüche, **dadurch gekennzeichnet, dass** der Anteil an oxidiertem Polyethylenwachs 7 Gew.-% bis 15 Gew.-% beträgt.

11. Mine oder Kreide nach einem der vorhergehenden Ansprüche, **dadurch gekennzeichnet, dass** der Anteil an Paraffinwachs 5 bis 15 Gew.-% beträgt.

12. Mine oder Kreide nach einem der vorhergehenden Ansprüche, **dadurch gekennzeichnet, dass** als Füllstoff Kaolin, Glimmer, Bimsmehl und/oder Talk enthalten ist.

13. Mine oder Kreide nach einem der vorhergehenden Ansprüche, **dadurch gekennzeichnet, dass** als Farbmittel organische und/oder anorganische Farbpigmente enthalten sind.

14. Mine oder Kreide nach einem der vorhergehenden Ansprüche, **dadurch gekennzeichnet, dass** Füllstoffe und Farbpigmente eine mittlere Partikelgröße D90 < 40 µm aufweisen.

## Claims

1. Lead or chalk for writing and/or painting purposes, with 15 wt.% to 30 wt.% of a lead base compound based on fat and wax and 40 wt.% to 80 wt.% of at least one filler and 0.1 wt.% to 30 wt.% of at least one colorant, wherein the lead base compound contains - relative to the total mass of the lead - 0.5 wt.- % to 10 wt.% of aluminium distearate and 5 wt.% to 20 wt.% of oxidised polyethylene wax, **characterised in that** the lead base compound also contains 5 wt.% to 22 wt.% of at least one paraffin wax.

2. Lead or chalk according to claim 1, **characterised in that** at least one microparaffin wax is contained.

3. Lead or chalk according to one of claims 1 or 2, **characterized in that** a paraffin wax, in particular a microparaffin wax, with a melting point of 60°C to 110°C is contained.

4. Lead or chalk according to claim 3, **characterised in that** a paraffin wax, in particular a microparaffin wax, with a melting point of 80°C to 85°C is contained.

5. Lead or chalk according to one of the preceding claims, **characterised in that** the proportion of lead base compound is at most 26 wt.%.

6. Lead or chalk according to one of the preceding claims, **characterised in that** the oxidised polyethylene wax has a melting point of 110°C to 135°C.

7. Lead or chalk according to claim 6, **characterised in that** the oxidised polyethylene wax has a melting point of 115 °C to 130 °C.

8. Lead or chalk according to one of the preceding claims, **characterised in that** the proportion of aluminium distearate is 0.5 wt.% to 5 wt.%.

9. Lead or chalk according to claim 8, **characterised in that** the proportion of aluminium distearate is 0.5 wt.% to 3 wt.%.

10. Lead or chalk according to one of the preceding claims, **characterised in that** the proportion of oxidised polyethylene wax is 7 wt.% to 15wt.%.

11. Lead or chalk according to one of the preceding claims, **characterised in that** the proportion of paraffin wax is 5 to 15 wt.%.

12. Lead or chalk according to one of the preceding claims, **characterised in that** kaolin, mica, pumice powder and/or talc is contained as filler.

13. Lead or chalk according to one of the preceding claims, **characterised in that** organic and/or inorganic colour pigments are contained as colorants.

14. Lead or chalk according to one of the preceding claims, **characterised in that** fillers and colour pigments have a mean particle size D90 < 40 µm.

## Revendications

1. Mine ou craie pour écrire et/ou peindre, avec 15 % en poids à 30 % en poids d'un composé de base de mine à base de graisse et de cire et 40 % en poids à 80 % en poids d'au moins une charge et 0,1 % en poids à 30 % en poids d'au moins un colorant, le composé de base de mine contenant - par rapport à la masse totale du mine - 0,5 % en poids % à 10 % en poids de distéarate d'aluminium et 5 % en poids à 20 % en poids de cire de polyéthylène oxydée, **caractérisé en ce que** le composé de base de la mine contient également 5 % en poids à 22 % en poids d'au moins une cire de paraffine.

2. Mine ou craie selon la revendication 1, **caractérisé en ce qu'**il contient au moins une cire de microparaffine.

3. Mine ou craie selon l'une des revendications 1 ou 2, **caractérisé en ce qu'**il contient une cire de paraffine, en particulier une cire de microparaffine, ayant un point de fusion de 60°C à 110°C.

4. Mine ou craie selon la revendication 3, **caractérisé en ce qu'**il contient une cire de paraffine, en particulier une cire de microparaffine, ayant un point de fusion de 80°C à 85°C.

5. Mine ou craie selon l'une des revendications précédentes, **caractérisé en ce que** la proportion de composé à base de mine est d'au plus 26% en poids.

6. Mine ou craie selon l'une des revendications précédentes, **caractérisé en ce que** la cire de polyéthylène oxydée a un point de fusion de 110°C à 135°C.

7. Mine ou craie selon la revendication 6, **caractérisé en ce que** la cire de polyéthylène oxydée a un point de fusion de 115 °C à 130 °C.

8. Mine ou craie selon l'une des revendications précédentes, **caractérisé en ce que** la proportion de distéarate d'aluminium est de 0,5 % en poids à 5 % en poids.

9. Mine ou craie selon la revendication 8, **caractérisé en ce que** la proportion de distéarate d'aluminium est de 0,5 % en poids à 3 % en poids.

10. Mine ou craie selon l'une des revendications précédentes, **caractérisé en ce que** la proportion de cire de polyéthylène oxydée est de 7 à 15% en poids.

11. Mine ou craie selon l'une des revendications précédentes, **caractérisé en ce que** la proportion de cire de paraffine est de 5 à 15% en poids.

12. Mine ou craie selon l'une des revendications précédentes, **caractérisée en ce que** le kaolin, le mica, la poudre de pierre ponce et/ou le talc sont contenus comme charge.

13. Mine ou craie selon l'une des revendications précédentes, **caractérisé en ce que** des pigments colorés organiques et/ou inorganiques sont contenus comme colorants.

14. Mine ou craie selon l'une des revendications précédentes, **caractérisé en ce que** les charges et les pigments de couleur ont une taille moyenne de particules D90 < 40 µm.
